# EUROPEAN PATENT SPECIFICATION

(11) **EP 4 092 863 B1**
(45) Date of publication and mention of the grant of the patent: **09.09.2026**
(21) Application number: 21305640.1
(22) Date of filing: 17.05.2021
(51) Int. Cl.: H02J 7/40, H02J 7/50, H02J 7/80

(54) **GAIN CONTROL FOR PACKET BASED WIRELESS BATTERY MANAGEMENT SYSTEM**
VERSTÄRKUNGSREGELUNG FÜR EIN PAKETBASIERTES DRAHTLOSES BATTERIEMANAGEMENTSYSTEM
COMMANDE DE GAIN POUR SYSTÈME DE GESTION DE BATTERIE SANS FIL À BASE DE PAQUETS

(43) Date of publication of application: 23.11.2022
(73) Proprietor: NXP B.V., 5656 AG Eindhoven (NL)
(72) Inventor: Martinez, Vincent Pierre, 31023 Toulouse (FR); Brink, Klaas, 5656 AG Eindhoven (NL); Moerman, Cornelis Marinus, 5656 AG Eindhoven (NL)
(74) Representative: Schmütz, Christian Klaus Johannes

(56) References cited:
- EP-A1- 3 536 542
- EP-A1- 3 675 320
- US-A1- 2004 131 027
- US-A1- 2010 128 906
- US-A1- 2016 013 685
- US-A1- 2016 373 185
- US-A1- 2020 099 111
- US-A1- 2020 328 621
- US-A1- 2021 098 833
- US-A1- 2021 119 456

## Description

### FIELD

The present disclosure relates generally to narrowband wireless technology, and more specifically, to packet based wireless communication systems that configure the gain of a wireless receiver according to a power level of an electronic signal including an incoming packet.

### BACKGROUND

Battery management systems (BMS) include an electronic system deployed in industrial or automotive applications to manage an array of lithium chemistry cells, battery packs, or the like to determine a safe operating area within which the battery pack provides the best performance. The BMS provides an electronic system for the complete control of all diagnostic and safety functions for the management and security of high voltage components of an electric vehicle (EV). For example, a BMS can disconnect a battery pack from an array if a predetermined voltage or temperature limit is exceeded. Wireless battery management systems (WBMS) can replace the wired control links of a BMS with a wireless connection, thereby eliminating the need for wiring and volume in the battery pack.

It is desirable for the wireless links of a WBMS to provide comparable performance levels, such as latency, throughput, and so on, as a wired BMS.

US 2016/373185 A1 relates to a method and an apparatus for wireless network communication.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
FIG. 1 is a system diagram of an example of a battery pack having a wireless battery management system (WBMS) in which one or more disclosed embodiments may be implemented.
FIG. 2 is a schematic block diagram of a battery management unit (BMU) and battery cell controllers (BCCs) of a WBMS, in accordance with an example embodiment of the present disclosure.
FIG. 3 is a flowchart illustrating a method for manual gain control for optimizing a packet structure exchanged by a battery management system, in accordance with an example embodiment of the present disclosure.
FIG. 4A is a diagram of a data packet processed by an AGC of a battery management system.
FIG. 4B is a diagram of a data packet exchanged between a BMU and a BCC of a battery management system, in accordance with an example embodiment of the present disclosure.

### DETAILED DESCRIPTION

Various wireless technologies, such as Bluetooth Low Energy (BLE), NXP-proprietary Generic Frequency-Shift Keying (also known as "GenFSK"), or other radio technologies such as 2.4 GHz narrowband technologies are often implemented to enable wireless connectivity of a WBMS system. Other wireless technologies such as Ultra-Wideband (UWB) may also apply. However, battery packs typically include a fair amount of reflective material, which yields a high number of signal reflections. These signal reflections, in turn, yield a highly frequency-selective response, which can be a challenge for narrowband transmissions. The amount of reflection, and the yielded frequency response depends on the geometry of the battery housing, material, or other design parameters. Furthermore, in closed battery pack environments, wireless channel characteristics are expected to vary slowly over time due to aging, temperature change, interference from external wireless devices, and so on, since gain control settings do not change quickly over time. Another factor is that each communication link between a battery management unit (BMU) and a battery cell controller (BCC) of a WBMS may yield unique wireless channel characteristics due to antenna placement. Therefore, two different links will exhibit different frequency response curves.

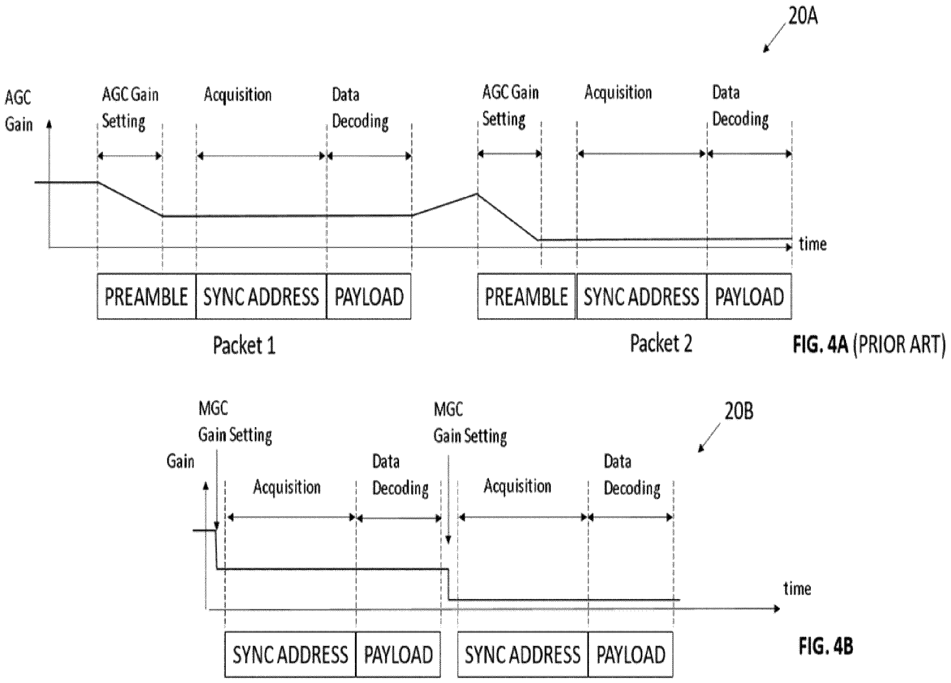

In brief overview, embodiments of the present inventive concepts include a WBMS system, apparatus, and/or method that includes a narrowband multi-channel sensor system that processes unicast messages exchanged between a master such as a BMU and a high number of slave nodes such as BCCs connected by unicast messages, which experience various wireless channel effects and characteristics. The term "BMU" generally refers to a master node of a wireless network star or star with hops topology, and the term "BCC" generally refers to a slave connecting node. The communications illustrated and described herein can comply with a communication protocol having a physical layer formed between physical interfaces of a BMU and a high number of BCC nodes. In some embodiments, the communication protocol has a physical layer formed between physical interfaces of the BMU and BCCs, respectively. For example, the unicast messages can be transmitted on a dedicated channel optimized for a particular BCC-BMU wireless communication link. The communication protocol can also define the structure of the packet, for example, shown in FIGs. 4A and 4B. Although not shown, embodiments of a packet structure may be formed of an RF signal comprising symbols or the like. As shown in FIG. 4A, a typical packet may be configured to include a preamble, a SYNC address field, and a payload described in detail below. The inventive concepts alleviate the undesirable wireless effects and characteristics by eliminating packet overhead by removing training sequences otherwise required for setting a gain. In typical wireless asynchronous networks, two actions need to be realized by the receiver before starting to decode the data section. The first task being the correct setting of the AGC gain, the second task being the acquisition of the packet and optionally time and frequency synchronization.

In typical configurations, the AGC loop processor is a first block at that input of a receiver, and is constructed and arranged to adjust the gain of the incoming signal so that it reaches the analog to digital converter (ADC) with proper dynamic: not insufficiently low power to ensure a good SNR or avoid quantization effects, and not too strong power to avoid saturation. This action is done automatically when the first part of the packet reaches the receiver.

The receiver may acquire a new packet based on the preamble sequence, and further use it for synchronization and timing estimation at the receiver. The preamble sequence is typically a predefined pattern, sometimes referred to as a 'golden sequence' or reference sequence known in advance by the receiver. To realize the acquisition of a new incoming packet, the receiver usually performs comparison, e.g. correlations, of the incoming signal with this reference sequence to detect the start of a packet. Furthermore, the known preamble sequence can be used to realize frequency and time synchronization.

Also, part of the preamble sequence is used by the receiver to set the amplifier gain. The inventive concepts, however, provides a packet structure without a preamble regardless of the wireless connection type, e.g., BLE, UWB, and so on. Unlike conventional receivers that process a preamble to train the AGC component to perform gain determination (see FIG. 4A), the packet structure in accordance with embodiments herein, e.g., shown by way of example in FIG. 4B, does not require a preamble. The SYNC address field in the packet shown in each of FIG. 4A and 4B includes contents, i.e., a sync address, used to realize the acquisition procedure, since the sync address is known upfront by the receive and can synchronize the receiver to incoming packets. The receiver may have a collection of possible such sequences if more than one sequence is possible to be used by the transmitter(s). Instead of an AGC block working autonomously, the master BMU can set its gain according to predefined and tracked power levels, which can alleviate the need for a preamble section of a packet, and therefore optimize the processing of a packet structure with less overhead. For example, the system can rely on MGC (manual gain control) to set the gain of the receiver according to a detected incoming packet power value, which is predetermined, tracked, and/or calibrated prior to processing by the BMU transceiver. In some embodiments where a preamble is included in an incoming packet, the preamble can optionally include contents used for synchronization rather than the SYNC address field.

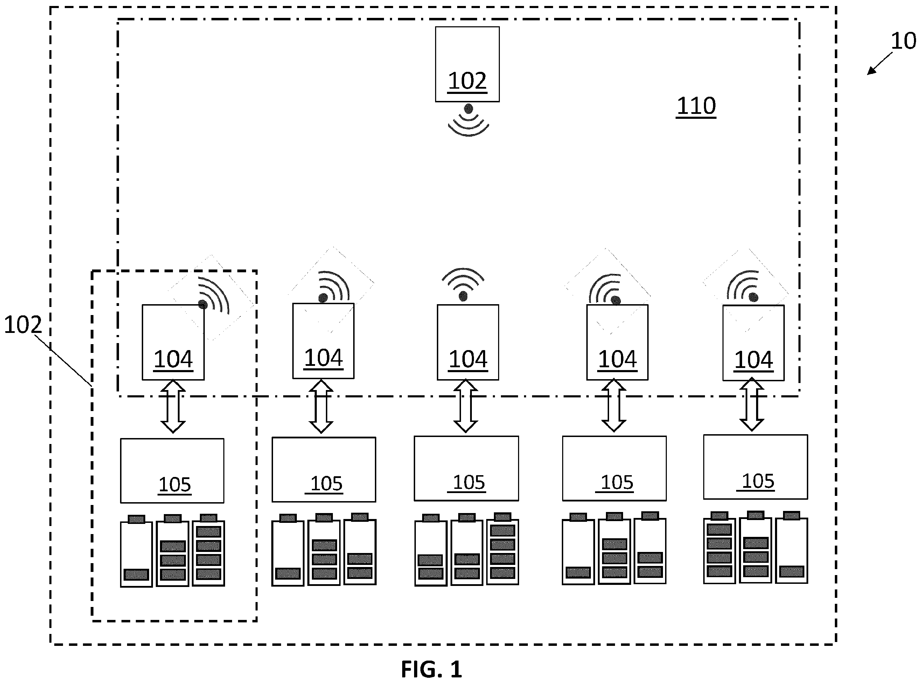

FIG. 1 is a system diagram of an example of a battery pack 10 in which one or more disclosed embodiments may be implemented. As shown in FIG. 1, the battery pack 10 typically includes a plurality of individual battery cell modules 102 and a WBMS 110. The battery pack 10 can also include other components not shown such as a power supply and so on.

Although the WBMS 110 is shown as an example, the concept can be applied to general wireless systems implemented in other industrial, commercial, or automotive applications including battery management. As shown in FIG. 1, the WBMS 110 includes a central coordinator or master controller such as battery management unit (BMU) 102 communicating with a plurality of distributed nodes or slave cell controllers, such as one or more battery cell controllers (BCC) 104. The battery cell controllers (BCC) 104 performs measurement for a plurality of cells 105, for example 12 or 20 cells arranged as arrays, clusters, or the like. As described herein, each module 102 may also include a battery cell controller (BCC) 104 of the WBMS 110 for monitoring the corresponding cells 105. In some embodiments, the BMU 102 and BCCs 104 communicate via a fixed network or the like so that the number of slave cell controllers is constant over time and so that all antennas have a fixed static location.

The BMU 102 provides a data path between the BCCs 104 and a vehicle communication bus. The BMU 102 controls and processes the telemetry data from the BCCs 104 and provides a summary to other electronic vehicle components on the vehicle communication bus.

In some embodiments, the WBMS 110 provides communication between its BMU 102 and BCCs 104 according to a star (or extended-star) topology, where the BMU master controller 102 establishes dialog with each BCC 104 by way of a series of unicast messages, transmitted on a dedicated channel, e.g., a BLE channel or the like optimized for the particular link 107 of a wireless transmission between the BMU 102 and BCC 104. Here, each packet is destined for a predetermined device, which permits the power levels of packets to be received, and predetermined by a transceiver 200 or related analog/RF front-end of the system comprising the antenna(s), power amplifier, AGC, and so on. As used herein, the transceiver 200 may be part of an apparatus and may include transmit and/or receive features that also require digital signal processing circuits and/or software, and so on. Therefore, the gain of the MGC can be adjusted to match the upcoming message power beforehand by the gain control mode module 210. Accordingly, the BMU master controller 102 communicates with each BCC slave 104 in an interleaved, or round-robin arrangement, for example, described above. However, other embodiments may include different scheduling schemes so long as in order to minimize transitions between receiver and transmitter states at the master BMU 102, it is expected that the BMU 102 will transmit and receive bursts of messages. For example, a master BMU 102 may receive the replies from multiple slave nodes back-to-back in a predefined and fixed order with predefined timings.

In order to allow the BMU 102 to communicate with a maximum number of slave nodes 104, it is preferable that the duration of the timeslot grids, i.e., where the system includes a memory that that stores an array of transmit and receive timeslots corresponding to data exchanges between the BMU 102 and BCC slaves 104, is as close as possible with respect to the duration of the messages. In other words, it is desirable for all messages to be output sequentially, or back-to-back, from the BCC slaves 104 to be sent with a minimum time gap between the messages according to the predefined communication protocol so long as compliance with the communication protocol establishing the wireless connection. For example, a time-grid of approximately 0.5ms may comply with the BLE protocol, which mandates a minimum time gap between messages of 150 µs. The time-grid values may depend on the number of messages to be sent, for example, when there are sufficient cells in the time-grid for the messages. Another factor may include the maximum throughput, for example, 2Mbps in compliance with the BLE protocol. In another example, a GenFSK-compliant wireless communication can be optimized to allow for a time gap of 50 µs or less. The foregoing factors, e.g., number of messages, maximum throughput, etc. may equally apply.

The WBMS 110 is not limited to those elements described in FIG. 1, and can include elements, features, and functions other than those illustrated in FIG. 1.

The WBMS 110 is constructed and arranged to perform synchronous battery voltage/current measurement, coulomb counting, cell temperature measurement and integrated cell balancing, validation of the measurement integrity, and/or other functions related to automotive battery monitoring and maximizing the life of a vehicle battery, for example, sensing the physical properties of a lithium chemistry battery, monitoring battery functions to validate the integrity of cell measurements, and so on. Each BCC 104 can monitor a battery pack comprising a plurality of battery cells, for example, ranging from 6-18 cells but not limited thereto. In doing so, data communications are established between the BMU 102 and at least one BCC 104. Each wireless BMU to BCC link 107 has a distinct wireless propagation channel characteristic, for example, yielding distinct a Packet Error Rate (PER) and Received Signal Strength Indication (RSSI). The wireless link 107 includes a wireless transmission line to convert data to be exchanged with a BCC 104 via the wireless link 107. The BMU 102 may include a driver circuit 209 constructed and arranged to form a link 107 with a BCC 104. In some embodiments, the driver circuit 209 is part of the transceiver interface 212 of the BMU 102. In other embodiments, the BCC may have a driver circuit that forms the link 107 with the BMU 107. The BMU 102 may include other components such as an RF output device, antenna, microprocessor, memory, and one or more interfaces that in some embodiments can be integrated on a single silicon chip or die, or in other embodiments, be positioned on different chips or related circuit devices. Vireless communication can be bidirectional between the BCCs 104 and BMU 102, which include upstream and downstream transceivers or the like.

In some embodiments, wireless communication operations performed by the WBMS 110 include the exchange of packets during a unicast message connection between the BMU 102 and a BCC 104. The packets are structured with less overhead than conventional wireless message exchanges. This is achieved by eliminating the need for a received packet preamble, used by the receiver to control the gain of the receiver. As shown in conventional configurations illustrated in FIG. 4A, the receiver may acquire a new packet based on the preamble sequence used for synchronization and timing estimation at the receiver. However, other receiver implementations can acquire a new packet based on the subsequent sections of the packet, for example, using the sync address field of a packet to synchronize the receiver to the incoming packet. In this configuration, the preamble is only used by the receiver to train the AGC, and ensure that the subsequent sequence (sync address) has the best SNR. The gain is typically settled and stable before processing the sync address. Therefore, in some embodiments as shown in FIG. 4B, the preamble is not required for processing.

In addition, new packets acquired based on a preamble sequence may be prone to undesirable reflections within a BMS metal enclosure, which can decay at a slow rate. This behavior can affect a receiver, for example, receiver functions of the BMU transceiver 200, that receives and processes back-to-back messages from different BCCs, where a change in an observed received power level may be gradual so as to drive the AGC to settle in a longer amount of time resulting in a total settling time that is unacceptably long as compared to the duration of the preamble, resulting in packet acquisition performance degradation.

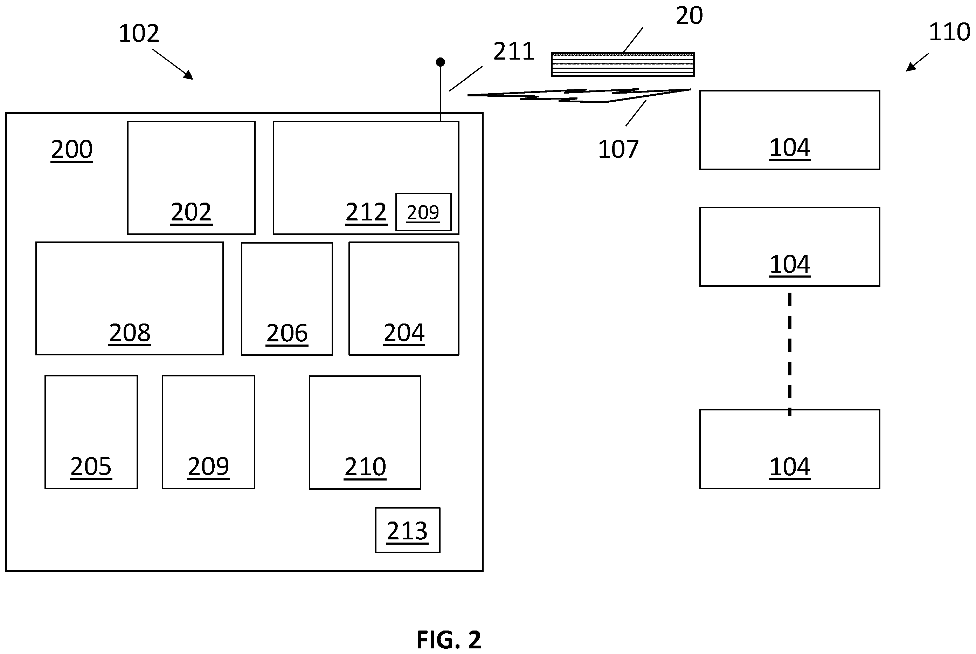

In lieu of processing the contents of a packet preamble, the BMU transceiver 200 relies on manual gain control (MGC) to set the gain of the incoming signal so that it reaches the ADC receiver according to a value of the incoming packet power. This is possible because the receiver stores and manages the interleaved scheduling scheme arrangement of timeslots receiving incoming unicast messages, and therefore the receiver can determine a power level of a next message. The arrangement of timeslots may either be stored as software, hardware, or a combination thereof, for example, in a computer memory such as the table storage 205 and can be accessed by a master controller of the BMU during an initialization phase, for example, a network configurator 202 of the transceiver 200 of FIG. 2, which can generate and output all information necessary to realize the timeslot grid. Therefore, the receiver can adjust the gain of the MGC in advance to match the predetermined power level of the next message. For example, the BMU can adjust the gain of the MGC in advance to match the predetermined power level of the next message, which might originate from a different BCC compared to the packet it is currently processing. In some embodiments, the BMU includes an AGC that operates in an MGC mode. In some embodiments, the BCC can adjust the gain of the MGC in advance to match the predetermined power level of the next message, which might never change in a pure star topology, and thus can be fixed only once during initialization phase. In some embodiments, the BCC includes an AGC that operates in an MGC mode. Accordingly, either or both of the BMC and BCC can perform gain adjustment according to embodiments of the present inventive concepts.

FIG. 2 is a schematic block diagram of an embodiment of the BMU 102 and BCC 104 of the WBMS 110 of FIG. 1.

As shown, in some embodiments, a transceiver 200 of the BMU 102 includes an MGC 204, a table storage 205, ADC 206, power detector 208, a gain control mode module 210, and a wireless receiver interface 212 or related input/output device. Some or all these components of the transceiver 200 may be co-located in a common enclosure, or may be part of different devices and in communication with each other via wired or wireless electronic interfaces. As mentioned above, the transceiver 200 can include both transmitter and receiver functions, although FIG. 2 illustrates receiver-related components, although not limited thereto. Similarly, although reference to a BCC 104 as a data transmitting device is shown and described, the BCC 104 can include comparable logic circuits and transceivers, and can therefore operate as a receiving device, for example, receiving messages in the form of packets. The BMU 102 and BCCs 104 can include other relevant hardware components such as an encoding/decoding circuit, first-in first-out (FIFO) memory, and so on which are not described herein for purposes of brevity. For example, an encoding/ decoding circuit can encode/decode data for transmission as a serial data stream along a signal transmission path.

The MGC 204 carries out the features of the inventive concept negating the need for a packet preamble required for an AGC. In some embodiments, an AGC is included and identified when packets are received including a preamble. The optional AGC may be activated by the gain control mode module 210 to adjust the gain of an incoming signal for output to the ADC 206 when the MGC is not required. For example, the gain control mode module 210 can process received signals corresponding to incoming packets 20 in response to a determination by the system that the packets 20 include a preamble including synchronization and timing estimation data or other data, and can communicate with the MGC 204 to process received signals corresponding to incoming packets 20 when a determination is made that the packets 20B do not include a preamble, for example, shown in FIG. 4B. In some embodiments, the gain control mode module 210 may operate in an MGC mode for adjusting upfront the gain of the MGC to match the upcoming message power.

In the absence of a preamble in a received packet 20, the MGC 204 sets the gain of the receiver exactly according to the incoming packet power, which is tracked by the power detector 208 and/or known upfront and/or calibrated upfront by the power detector 208. For example, the wireless receiver apparatus can be tracked by means of a power or RSSI (receiver signal strength indicator) measurement, which can be performed in parallel with the decoding of the data section. Here, the power detector 208 may include an RSSI measurement circuit, module, or related processor, or this processor may be separate from the power detector 208. From this RSSI measurement, the MGC can be set to having a predefined headroom, for example, 3 dB but not limited thereto. For example, the BMU transceiver 200 can be calibrated during manufacturing, upgrade, or related event where a gain range or threshold, and therefore corresponding power levels, are established. As mentioned above, the battery cell module 102 is assembled to include a set of particular battery cells 105. During testing, test messages are exchanged between the BMU 102 and BCC 104 managing the battery cells 105, and power and gain values are determined. However, due to environmental conditions, such as temperature change, a battery cell replacement, etc., a desired gain and power level may slowly change over time. Therefore, the MGC 204 can set the receiver's gain to accommodate such changes.

The receiver knows the overall timeslot organization, so it knows the power of the next message formed of the packets 20. Therefore, the gain of the MGC can be adjusted to match the upcoming message power by the gain control mode module 210. As described herein, the gain control mode module manages the gain control modes, for example, MGC, AGC, or a combination thereof. In doing so, the gain control mode module 210 performs a packet acquisition technique that allows recognition of a new packet received via the antenna 211 to a wireless receiver interface 212 of the transceiver 200. The interface 212 may include a driver circuit between the power detector 208 and the transmission line that converts processed bit data for output to the transmission line.

Here, the gain control mode module 210 includes a special purpose processor formed of electronics (hardware), software, firmware, or a combination thereof that permits the BMU to set its gain according to predefined and tracked power levels as provided by the power detector 208, for example, described above. In doing so, the gain control mode module 210 may activate or otherwise communicate with the MGC 204 to adjust the gain of the incoming signal so that it is output to the ADC 206 according to a predetermined threshold requirement sufficient for processing by the ADC 206. The wireless receiver apparatus relies on the MGC 204 to set the gain of the incoming signal so that it reaches the ADC receiver 206 of the system according to a value of the incoming packet power. This is possible because the receiver stores and manages an interleaved scheduling scheme arrangement of timeslots receiving incoming unicast messages, and therefore the transceiver can determine a power level of a next message. In embodiments where the packet includes no preamble, the acquisition technique processes relevant contents of the sync address field, for example, shown in FIG. 4B. Such receiver configurations that acquire a new packet based on the subsequent sections of the packet, such as the sync address, can be protected from undesirable effects such as the slow decay of symbol energy.

The foregoing depends on whether the incoming packet has a preamble that includes a pattern having a known sequence used for synchronization and timing estimation for processing by the gain control mode module 210. The gain control mode module 210 may therefore permit that MGC 204 to process packets that do not have preambles so that the transceiver 200 operates with less overhead since the training sequence data in the preamble for training the AGC otherwise required for gain setting is not necessary.

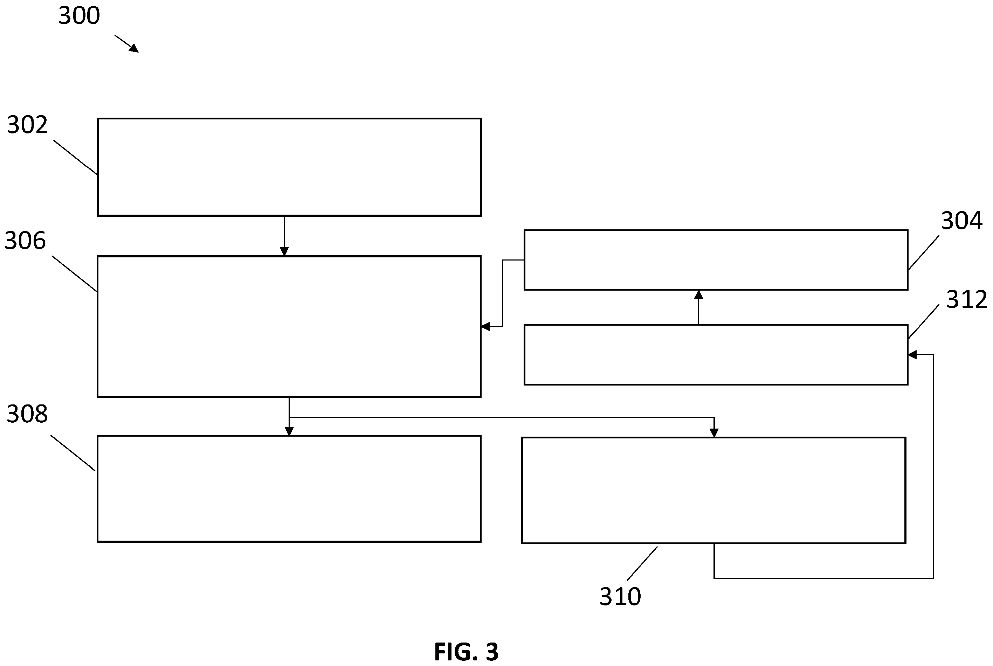

FIG. 3 is a flowchart illustrating a method 300 for manual gain control for optimizing a packet structure exchanged by a battery management system, in accordance with an example embodiment of the present disclosure. Some or all of the method 300 can be performed by various computer processors and memory components of the WBMS 110 of FIGs. 1 and 2. Accordingly, in describing the method 300, reference is made to features described in FIGs. 1 and 2.

At block 302, a link 107 (see FIG. 2) is formed between the BMU 102 and at least one BCC 104 of a plurality of BCCs configured to communicate with the BMU, for example, based on a star-topology, where the master establishes dialog with each and every BCC slave by means of a series of unicast messages 20, transmitted on a dedicated channel optimized for that link, for example, a channel in compliance with the BLE protocol.

At block 304, MGC settings to be used are stored, for example, at the table storage 205, network configurator 202, or the like, but not limited thereto. Such settings can be unique and applicable to all messages, or dependent on the time instant or dependent of the expected communication source. Considering a fixed timeslotted grid, in some embodiments, the order and the power levels of received packets are thus deterministic, and the BMU 102 may use different MGC settings for receiving messages originating from different BCC. The power level determination permits the BMU 102 to configure the gain accordingly between received packets, since the BMU 102 knows the expected power level(s) for each slave BCC node message, for example, a reply to a BMU message. The receiver, in particular, the power detector 208 can communicate with the table 205 to track the overall timeslot organization, and in doing so stores information regarding expected power level of messages to be received. The AGC settings can be tracked and adapted over time by the power detector 208.

At block 306, the MGC 204 can adjust its gain using MGC settings 304, to match the power level of the next incoming message to be received by the BMU 102.

At block 308, the packet is processed without a preamble, and the system relies on the MGC 204 to set the gain of the receiver according to the incoming packet power.

At block 310, the power, RSSI, or other feature of the incoming packet is determined. The power level of a signal, e.g., RF signal, carrying a packet received by the BMU 102 is determined, for example, by the power detector 208 of the BMU 102, for example during an initialization phase, or during run-time as a continuous measurement. The received signal can be an RF signal or other electromagnetic signal.

At block 312, the power measurement 310 is used to adjust or fine-tune the MGC settings for the next occurrence of a packet sent by this transmitter. Considering a fixed timeslotted grid, in some embodiments, the power levels of received packets are thus deterministic and predefined, and the power detector 208 confirms the predefined power level, or determines an error or the like if the tracked power level is different than the predefined level by a predetermined threshold value.

FIG. 4A is a diagram of a data packet 20A processed by an AGC of a battery management system. In contrast, FIG. 4B is a diagram of a data packet 20B exchanged between a BMU 102 and a BCC 104 of a battery management system, in accordance with an example embodiment of the present disclosure.

As shown in FIG. 4A, a received packet includes a preamble, a sync address field, and a payload. The preamble is provided train the AGC. The gain is settled and stable before the sync address is processed. The sync address field may include a Network Address, Access Address, or the like, that is processed according to a packet acquisition technique for recognizing incoming packets. Some or all of the acquisition technique can be executed by a special-purpose hardware processor 213, a digital signal processor, and/or other hardware and software, but not limited thereto. Here, when particular protocols, such as the GenFSK wireless protocol, performs an acquisition solely based on the Network Address, the preamble is not required, and is only provided for use by the AGC to settle before receiving the Network Address. Here, the Network Address bytes can be received an optimal signal strength for best acquisition performance, while obviating the need for the preamble, as shown in FIG. 4B. Here, the BMU 102 can receive a reply from a BCC 104 in a manner that eliminates packet overhead by removing the need for training sequences for gain setting. For example, the packet structure shown in FIG. 4B can be configured without a preamble, rely on the MGC to set the gain of the receiver exactly according to incoming packet power, which is tracked and known and calibrated upfront, at start-up and periodically when running. The receiver knows the overall timeslot organization, so it knows the power of the next message. Therefore, the gain of the MGC can be adjusted upfront to match the upcoming message power in MGC mode, and without the preamble. In some embodiments, the system is organized on a star or extended-star topology, with a static number of slave nodes 104 interacting with the master BMU 102. The BMU 102 will receive the replies from the BCCs 104 following a predefined order, that it decides. From initialization phase and from previous packets, the BMU 102 processes the expected power level for each slave node reply, and can thus configure its manual gain accordingly between each packets, for example, shown in FIG. 4B, because the BMU 120 recognizes from the table the predetermined sequence of communications from the multiple BCCs and can therefore establish the source of the next packet to be received.

As will be appreciated, embodiments as disclosed include at least the following. In one embodiment, a battery management system comprises a wireless receiver apparatus that receives and processes an electromagnetic signal that includes at least one predefined power level of a packet transmitted to the wireless receiver apparatus relative to the pre-defined power level; a power detector that determines an actual power level or a change in the actual power level of the transmitted packet received at the wireless receiver apparatus; and a manual gain control processor that configures a gain of the wireless receiver apparatus according to the actual power level or the change in the actual power level.

Alternative embodiments of the battery management system include one of the following features, or any combination thereof.

The gain is adjusted to match the actual power level of at least one subsequent packet transmitted to the wireless receiver apparatus.

The battery management system further comprises a table storage that stores timeslot organization data between the wireless receiver apparatus and a plurality of more battery cell controllers monitoring a plurality of battery cells, wherein the timeslot organization data includes predetermined power levels between each of the plurality of more battery cell controllers and the wireless receiver apparatus, which permits a gain control mode module of the battery management system to process a predetermined power level stored in the table storage of a next message for receipt by the wireless receiver apparatus.

The gain control mode module compares the predetermined power levels to the actual power or change in the actual power level to upfront the gain of the MGC to match the actual power level of the received electromagnetic signal.

The table storage stores an array of transmit and receive timeslots corresponding to data exchanges in an interleaved scheduling scheme arrangement between the wireless receiver apparatus and the battery cell controllers so that the messages output from the battery cell controllers are sent with a minimum time gap therebetween according to a communication protocol.

The wireless receiver apparatus relies on the wireless receiver apparatus relies on the manual gain controller to set the gain of the incoming signal so that it reaches an analog-to-digital converter of the system according to a value of the incoming packet power.

The wireless receiver apparatus tracks the overall timeslot organization, and in doing so stores information at the table storage regarding a known power level of one or more unicast messages to be received from by the wireless receiver apparatus.

The manual gain control processor acquires a new packet based on a sync address field of the transmitted packet.

The gain of the wireless receiver apparatus is calibrated in advance of receipt of the packet according to a preconfigured arrangement of timeslots by adjusting the gain of the MGC to match the actual power level of the transmitted packet.

The battery management system further comprises a battery management unit that configures its gain between two consecutive packets transmitted to the wireless receiver apparatus.

The packet is absent a preamble.

The battery management system further comprises a special-purpose computer processor that executes an acquisition procedure at the wireless receiver apparatus to recognizes new packets to be received, wherein the acquisition procedure includes a comparison of the header of the new packets to a reference sequence known in advance by the wireless receiver apparatus.

**In** another embodiment, a wireless receiving device comprises a driver circuit that forms an electronic communication link between a battery management unit and at least one battery cell controller; a power detector that determines an actual power level or a change in the actual power level of a packet absent a preamble transmitted with the electronic communication link relative to a pre-defined power level; and a manual gain control processor that processes the packet absent the preamble and configures a gain of the wireless receiver apparatus according to the actual power level.

Alternative embodiments of the wireless receiving device include one of the following features, or any combination thereof.

The power detector tracks or calibrates the incoming power level in advance of the manual gain control processor processing the packet absent the preamble.

The wireless receiving device further comprises a gain control mode module that controls the manual gain control processor to adjust the gain according to the incoming power level.

The wireless transceiver device further comprises a table storage that stores timeslot organization data between the wireless receiver apparatus and the at least one battery cell controller monitoring a plurality of battery cells, wherein the timeslot organization data includes predetermined power levels between each of the at least one battery cell controller and the wireless receiver apparatus, which permits a gain control mode module of the wireless transceiver device to process a predetermined power level stored in the table storage of a next message for receipt by the wireless receiver apparatus.

The gain of the manual gain control processor is adjusted to match the upcoming message power by the gain control mode module.

The wireless transceiver device further comprises a special-purpose computer processor that executes an acquisition procedure at the wireless receiver apparatus to recognizes new packets to be received, wherein the acquisition procedure includes a comparison of the header of the new packets to a reference sequence known in advance by the wireless receiver apparatus.

**In** another embodiment, a method for manual gain control for optimizing a packet structure exchanged between elements of a battery pack comprises forming an electronic communication link between a battery management unit and at least one battery cell controller; determining an actual power level or a change in the actual power level of a packet absent a preamble transmitted with the electronic communication link relative to a pre-defined power level; and processing the packet absent the preamble and configures a gain of the wireless receiver apparatus according to the actual power level.

Alternative embodiments of the method include one of the following features, or any combination thereof.

Processing the packet according to the actual power level includes the adjusting the gain to match the actual power level of at least one subsequent packet exchanged by the battery management system.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

## Claims

1. An apparatus (102) for managing at least one battery, comprising:
a wireless receiver apparatus (212) that receives and processes an electromagnetic signal that includes at least one predefined power level of a packet transmitted to the wireless receiver apparatus;
a power detector (208) that determines an actual power level of the transmitted packet received at the wireless receiver apparatus relative to the pre-defined power level or a change in the actual power level of the transmitted packet received at the wireless receiver apparatus relative to the pre-defined power level; and
a manual gain control processor (210) that configures a gain of the wireless receiver apparatus according to the actual power level or the change in the actual power level.

2. The apparatus of claim 1, wherein the gain is adjusted to match the actual power level of at least one subsequent packet transmitted to the wireless receiver apparatus.

3. The apparatus of claim 1 or 2, further comprising a table storage (205) that stores timeslot organization data between the wireless receiver apparatus and a plurality of battery cell controllers (104) monitoring a plurality of battery cells (105), wherein the timeslot organization data includes predetermined power levels between each of the plurality of more battery cell controllers and the wireless receiver apparatus, which permits a gain control mode module of the battery management system to process a predetermined power level stored in the table storage of a next message for receipt by the wireless receiver apparatus.

4. The apparatus of any preceding claim, wherein the gain control mode module compares the predetermined power levels to the actual power level or the change in the actual power level to adjusted upfront the gain to match the actual power level of the received electromagnetic signal.

5. The apparatus of claim 3 or 4, wherein the table storage stores an array of transmit and receive timeslots corresponding to data exchanges in an interleaved scheduling scheme arrangement between the wireless receiver apparatus and the battery cell controllers so that the messages output from the battery cell controllers are sent with a minimum time gap therebetween according to a communication protocol.

6. The apparatus of any of claims 3 to 5, wherein the wireless receiver apparatus relies on the manual gain controller to set the gain of the incoming signal so that it reaches an analog-to-digital converter (ADC) (206) of the system according to a value of the incoming packet power.

7. The apparatus of any of claims 3 to 6, wherein the wireless receiver apparatus tracks the overall timeslot organization, and in doing so stores information at the table storage regarding a known power level of one or more unicast messages to be received from by the wireless receiver apparatus.

8. The apparatus of any preceding claim, wherein the manual gain control processor acquires a new packet based on a sync address field of the transmitted packet.

9. The apparatus of any preceding claim, wherein the gain of the wireless receiver apparatus is calibrated in advance of receipt of the packet according to a preconfigured arrangement of timeslots by adjusting the gain of the manual gain control processor to match the actual power level of the transmitted packet.

10. The apparatus of any preceding claim, further comprising a battery management unit that configures its gain between two consecutive packets transmitted to the wireless receiver apparatus.

11. The apparatus of any preceding claim, wherein the packet is absent a preamble.

12. The apparatus of any preceding claim, further comprising a special-purpose computer processor (213) that executes an acquisition procedure at the wireless receiver apparatus to recognizes new packets to be received, wherein the acquisition procedure includes a comparison of the header of the new packets to a reference sequence known in advance by the wireless receiver apparatus.

13. A method for manual gain control for optimizing a packet structure exchanged between elements of a battery pack, comprising:
forming an electronic communication link (107) between a battery management unit (102) and at least one battery cell controller (104);
determining an actual power level of a packet absent a preamble transmitted with the electronic communication link relative to a pre-defined power level or a change in the actual power level of a packet absent a preamble transmitted with the electronic communication link relative to a pre-defined power level; and
processing the packet absent the preamble and configure a gain of the wireless receiver apparatus according to the actual power level.

14. The method of claim 13, wherein processing the packet according to the actual power level includes the adjusting the gain to match the actual power level of at least one subsequent packet exchanged by the battery management system.

## Patentansprüche

1. Einrichtung (102) zum Verwalten mindestens einer Batterie, die Folgendes umfasst:
eine drahtlose Empfängereinrichtung (212), die ein elektromagnetisches Signal empfängt und verarbeitet, das mindestens einen vordefinierten Leistungspegel eines an die drahtlose Empfängereinrichtung übertragenen Pakets beinhaltet;
einen Leistungsdetektor (208), der einen tatsächlichen Leistungspegel des übertragenen Pakets, das an der drahtlosen Empfängereinrichtung empfangen wird, relativ zu dem vordefinierten Leistungspegel oder eine Änderung des tatsächlichen Leistungspegels des übertragenen Pakets, das an der drahtlosen Empfängereinrichtung empfangen wird, relativ zu dem vordefinierten Leistungspegel bestimmt; und
einen manuellen Verstärkungssteuerprozessor (210), der eine Verstärkung der drahtlosen Empfängereinrichtung gemäß dem tatsächlichen Leistungspegel oder der Änderung des tatsächlichen Leistungspegels konfiguriert.

2. Einrichtung nach Anspruch 1, wobei die Verstärkung angepasst wird, um mit dem tatsächlichen Leistungspegel von mindestens einem nachfolgenden Paket, das an die drahtlose Empfängereinrichtung übertragen wird, übereinzustimmen.

3. Einrichtung nach Anspruch 1 oder 2, die ferner einen Tabellenspeicher (205) umfasst, der Zeitschlitzorganisationsdaten zwischen der drahtlosen Empfängereinrichtung und einer Mehrzahl von Batteriezellensteuerungen (104) speichert, die eine Mehrzahl von Batteriezellen (105) überwachen, wobei die Zeitschlitzorganisationsdaten vorbestimmte Leistungspegel zwischen jeder der Mehrzahl von mehreren Batteriezellensteuerungen und der drahtlosen Empfängereinrichtung beinhalten, was einem Verstärkungssteuermodusmodul des Batterieverwaltungssystems ermöglicht, einen vorbestimmten Leistungspegel zu verarbeiten, der in dem Tabellenspeicher einer nächsten Nachricht zum Empfang durch die drahtlose Empfängereinrichtung gespeichert ist.

4. Einrichtung nach einem der vorhergehenden Ansprüche, wobei das Verstärkungssteuermodusmodul die vorbestimmten Leistungspegel mit dem tatsächlichen Leistungspegel oder der Änderung des tatsächlichen Leistungspegels vergleicht, um die Verstärkung vorwärts anzupassen, um mit dem tatsächlichen Leistungspegel des empfangenen elektromagnetischen Signals übereinzustimmen.

5. Einrichtung nach Anspruch 3 oder 4, wobei die Tabellenspeicherung ein Array von Übertragungs- und Empfangszeitschlitzen speichert, die Datenaustauschen in einer verschachtelten Planungsschemaanordnung zwischen der drahtlosen Empfängereinrichtung und den Batteriezellensteuerungen entsprechen, so dass die von den Batteriezellensteuerungen ausgegebenen Nachrichten mit einer minimalen Zeitlücke dazwischen gemäß einem Kommunikationsprotokoll gesendet werden.

6. Einrichtung nach einem der Ansprüche 3 bis 5, wobei sich die drahtlose Empfängereinrichtung auf die manuelle Verstärkungssteuerung stützt, um die Verstärkung des eingehenden Signals so einzustellen, dass sie einen Analog-Digital-Wandler (ADC) (206) des Systems gemäß einem Wert der eingehenden Paketleistung erreicht.

7. Einrichtung nach einem der Ansprüche 3 bis 6, wobei die drahtlose Empfängereinrichtung die gesamte Zeitschlitzorganisation verfolgt und dabei Informationen in der Tabellenspeicherung bezüglich eines bekannten Leistungspegels einer oder mehrerer Unicast-Nachrichten speichert, die von durch die drahtlose Empfängereinrichtung zu empfangen sind.

8. Einrichtung nach einem der vorhergehenden Ansprüche, wobei der manuelle Verstärkungssteuerprozessor ein neues Paket basierend auf einem Synchronisationsadressenfeld des übertragenen Pakets erfasst.

9. Einrichtung nach einem der vorhergehenden Ansprüche, wobei die Verstärkung der drahtlosen Empfängereinrichtung vor dem Empfang des Pakets gemäß einer vorkonfigurierten Anordnung von Zeitschlitzen durch Anpassen der Verstärkung des Prozessors zur manuellen Verstärkungssteuerung, damit diese mit dem tatsächlichen Leistungspegel des übertragenen Pakets übereinstimmt, kalibriert wird.

10. Einrichtung nach einem der vorhergehenden Ansprüche, die ferner eine Batterieverwaltungseinheit umfasst, die ihre Verstärkung zwischen zwei aufeinanderfolgenden Paketen konfiguriert, die an die drahtlose Empfängereinrichtung übertragen werden.

11. Einrichtung nach einem der vorhergehenden Ansprüche, wobei das Paket keine Präambel aufweist.

12. Einrichtung nach einem der vorhergehenden Ansprüche, die ferner einen Spezialcomputerprozessor (213) umfasst, der einen Erfassungsvorgang an der drahtlosen Empfängereinrichtung ausführt, um neue zu empfangende Pakete zu erkennen, wobei der Erfassungsvorgang einen Vergleich des Headers der neuen Pakete mit einer Referenzsequenz beinhaltet, die von der drahtlosen Empfängereinrichtung im Voraus bekannt ist.

13. Verfahren zur manuellen Verstärkungssteuerung zum Optimieren einer Paketstruktur, die zwischen Elementen eines Batteriepacks ausgetauscht wird, das Folgendes umfasst:
Bilden einer elektronischen Kommunikationsverbindung (107) zwischen einer Batterieverwaltungseinheit (102) und mindestens einer Batteriezellensteuerung (104);
Bestimmen eines tatsächlichen Leistungspegels eines Pakets ohne eine Präambel, die mit der elektronischen Kommunikationsverbindung übertragen wird, relativ zu einem vordefinierten Leistungspegel oder einer Änderung des tatsächlichen Leistungspegels eines Pakets ohne eine Präambel, die mit der elektronischen Kommunikationsverbindung übertragen wird, relativ zu einem vordefinierten Leistungspegel; und
Verarbeiten des Pakets ohne die Präambel und Konfigurieren einer Verstärkung der drahtlosen Empfängereinrichtung gemäß dem tatsächlichen Leistungspegel.

14. Verfahren nach Anspruch 13, wobei das Verarbeiten des Pakets gemäß dem tatsächlichen Leistungspegel das Anpassen der Verstärkung beinhaltet, um mit dem tatsächlichen Leistungspegel mindestens eines nachfolgenden Pakets übereinzustimmen, das durch das Batterieverwaltungssystem ausgetauscht wird.

## Revendications

1. Appareil (102) de gestion d'au moins une batterie, comprenant :
un appareil récepteur sans fil (212) qui reçoit et traite un signal électromagnétique qui comporte au moins un niveau de puissance prédéfini d'un paquet transmis à l'appareil récepteur sans fil ;
un détecteur de puissance (208) qui détermine un niveau de puissance réel du paquet transmis reçu au niveau de l'appareil récepteur sans fil par rapport au niveau de puissance prédéfini ou une variation du niveau de puissance réel du paquet transmis reçu au niveau de l'appareil récepteur sans fil par rapport au niveau de puissance prédéfini ; et
un processeur de commande manuelle de gain (210) qui configure un gain de l'appareil récepteur sans fil conformément au niveau de puissance réel ou à la variation du niveau de puissance réel.

2. Appareil selon la revendication 1, dans lequel le gain est ajusté de manière à ce qu'il soit adapté au niveau de puissance réel d'au moins un paquet suivant transmis à l'appareil récepteur sans fil.

3. Appareil selon la revendication 1 ou 2, comprenant en outre une unité de stockage de table (205) qui stocke des données d'organisation de créneaux temporels entre l'appareil récepteur sans fil et une pluralité de contrôleurs de cellule de batterie (104) surveillant une pluralité de cellules de batterie (105), les données d'organisation de créneaux temporels comportant des niveaux de puissance prédéterminés entre chacun de la pluralité de plusieurs contrôleurs de cellule de batterie et l'appareil récepteur sans fil, ce qui permet à un module de mode de commande de gain du système de gestion de batterie de traiter un niveau de puissance prédéterminé, stocké dans l'unité de stockage de table, d'un prochain message destiné à être reçu par l'appareil récepteur sans fil.

4. Appareil selon l'une quelconque des revendications précédentes, dans lequel le module de mode de commande de gain compare les niveaux de puissance prédéterminés au niveau de puissance réel ou à la variation du niveau de puissance réel afin d'ajuster à l'avance le gain de manière à ce qu'il soit adapté au niveau de puissance réel du signal électromagnétique reçu.

5. Appareil selon la revendication 3 ou 4, dans lequel l'unité de stockage de table stocke un tableau de créneaux temporels d'émission et de réception correspondant à des échanges de données dans un agencement de schéma d'ordonnancement entrelacé entre l'appareil récepteur sans fil et les contrôleurs de cellule de batterie de sorte que les messages produits par les contrôleurs de cellule de batterie sont envoyés avec un intervalle de temps minimal entre eux conformément à un protocole de communication.

6. Appareil selon l'une quelconque des revendications 3 à 5, dans lequel l'appareil récepteur sans fil fait appel au contrôleur de commande manuelle de gain afin de régler le gain du signal entrant de sorte que celui-ci atteigne un convertisseur analogique-numérique (ADC) (206) du système conformément à une valeur de la puissance du paquet entrant.

7. Appareil selon l'une quelconque des revendications 3 à 6, dans lequel l'appareil récepteur sans fil suit l'organisation globale des créneaux temporels et, ce faisant, stocke, au niveau de l'unité de stockage de table, des informations concernant un niveau de puissance connu d'un ou de plusieurs messages unicast devant être reçus de par l'appareil récepteur sans fil.

8. Appareil selon l'une quelconque des revendications précédentes, dans lequel le processeur de commande manuelle de gain acquiert un nouveau paquet sur la base d'un champ d'adresse de synchronisation du paquet transmis.

9. Appareil selon l'une quelconque des revendications précédentes, dans lequel le gain de l'appareil récepteur sans fil est étalonné préalablement à la réception du paquet conformément à un agencement préconfiguré de créneaux temporels par ajustement du gain du processeur de commande manuelle de gain de manière à ce qu'il soit adapté au niveau de puissance réel du paquet transmis.

10. Appareil selon l'une quelconque des revendications précédentes, comprenant en outre une unité de gestion de batterie qui configure son gain entre deux paquets consécutifs transmis à l'appareil récepteur sans fil.

11. Appareil selon l'une quelconque des revendications précédentes, dans lequel le paquet est dépourvu de préambule.

12. Appareil selon l'une quelconque des revendications précédentes, comprenant en outre un processeur informatique spécialisé (213) qui exécute une procédure d'acquisition au niveau de l'appareil récepteur sans fil afin de reconnaître de nouveaux paquets devant être reçus, la procédure d'acquisition comportant une comparaison de l'en-tête des nouveaux paquets avec une séquence de référence connue à l'avance par l'appareil récepteur sans fil.

13. Procédé de commande manuelle de gain pour l'optimisation d'une structure de paquet échangée entre des éléments d'un bloc-batterie, comprenant :
l'établissement d'une liaison de communication électronique (107) entre une unité de gestion de batterie (102) et au moins un contrôleur de cellule de batterie (104) ;
la détermination d'un niveau de puissance réel d'un paquet dépourvu de préambule transmis au moyen de la liaison de communication électronique par rapport à un niveau de puissance prédéfini ou d'une variation du niveau de puissance réel d'un paquet dépourvu de préambule transmis au moyen de la liaison de communication électronique par rapport à un niveau de puissance prédéfini ; et
le traitement du paquet dépourvu de préambule et la configuration d'un gain de l'appareil récepteur sans fil conformément au niveau de puissance réel.

14. Procédé selon la revendication 13, dans lequel le traitement du paquet conformément au niveau de puissance réel comporte l'ajustement du gain de manière à ce qu'il soit adapté au niveau de puissance réel d'au moins un paquet suivant échangé par le système de gestion de batterie.
